# EUROPEAN PATENT SPECIFICATION

(11) **EP 0 706 903 B1**
(45) Date of publication and mention of the grant of the patent: **25.11.1998**
(21) Application number: 95115768.4
(22) Date of filing: 06.10.1995
(51) Int. Cl.: B60B 33/02

(54) **An orientatable and lockable wheel set for moving mobile working platforms, mobile scaffolding and the like**
Schwenkbare und bremsbare Radanordnung für bewegbare Arbeitsbühne, mobiles Gerüst und dergleichen
Dispositif de roue orientable et freinable pour plateforme de travail mobile, échafaudage mobile et similaire

(30) Priority: 11.10.1994 IT BO940168 U
(43) Date of publication of application: 17.04.1996
(73) Proprietor: TELLURE ROTA S.p.A., 41043 Formigine (Modena) (IT)
(72) Inventor: Botti, Giorgio, I-41042 Casalgrande (Reggio Emilia) (IT)
(74) Representative: Cantaluppi, Stefano

(56) References cited:
- EP-A- 0 413 197
- EP-A- 0 666 189
- DE-A- 2 441 676
- DE-A- 3 426 443
- DE-U- 9 314 939
- FR-A- 2 255 804
- GB-A- 2 183 468

## Description

The present innovation relates to an orientatable and lockable wheel set of the type used in particular, but not exclusively, for moving mobile working platforms and mobile scaffolding in general. The term "wheel set" is used hereinafter to mean the complete unit formed by the actual wheel and the support structures thereof. "Orientatable" indicates the ability of the wheel set to rotate about a vertical axis following a steering action.

An orientatable and lockable wheel set of the above type is known from DE-A-3 426 443 (corresponding to the preamble of claim 1.)

A need felt by the users of mobile working platforms is that such structures should be very lightweight and transportable and should have an overall mechanical strength sufficient to support securely the persons working on the mobile working platform and all the material and equipment necessary for carrying out the work. Because mobile working platforms rest on the ground via a given number of wheel sets, generally four, the production of these components is critical in achieving a high degree of reliability and overall strength of the mobile working platform.

In a typical arrangement, when the mobile working platforms are not being used, they are closed in such a manner that they are flattened laterally. In this state, in the case of mobile working platforms of the known type, the large space requirement is generally attributable to the wheel sets.

Therefore, one disadvantage of orientatable and lockable wheel sets of the type indicated above is their significant space requirement in the lateral direction.

Another disadvantage of orientatable and lockable wheel sets of the known type is the fact that the geometries of their support structures are uneven and have recesses and projections which, in addition to picking up a large amount of material drips, debris, dust and dross produced in the course of the works carried out on the mobile working platform, are hardly practical to clean.

Another disadvantage results from the fact that the support structure of the actual wheel of a wheel set of the known type is generally produced in the form of a fork by folding a plate in the shape of a U, and a given number of additional reinforcing elements are connected thereto, for example, by welding. This situation creates a considerable burden to the production with regard to controlling the quality of the connections of the various elements.

The aim of the present innovation is to overcome the disadvantages of the prior art by providing an orientatable and lockable wheel set which is of the type indicated in the preamble to the present description and which has a simple and economical structure, is easy and convenient to use and is extremely reliable over time.

These aims are achieved by means of an orientatable and lockable wheel set for use in association with mobile working platforms, mobile scaffolding and the like, according to claim 1. Further features of the wheel set are disclosed in the dependent claims.

One advantage of the orientatable and lockable wheel set according to the present invention is that the braking means, which, in a preferred embodiment, especially take the form of a buffer element, are substantially aligned with the vertical axis of rotation of the wheel set so that, in the locked state, there are no undesired bending stresses on the fork-shaped support structure.

Another advantage of the present innovation is that the orientatable and lockable wheel set has a reduced space requirement, especially in plan view, as a result of which it is less exposed to soiling than are wheel sets of known type and it can thus be kept clean more easily, with resulting advantages from the functional and aesthetic points of view.

Other characteristics and advantages of the present invention will become clear from the following detailed description of a preferred embodiment which is given with reference to the appended drawings which are provided purely by way of non-limiting example and in which:
- Figure 1 is a perspective view of an example of a wheel set according to the present invention;
- Figure 2 is a plan view according to arrow II of Figure 1;
- Figure 3 is a side view which is partially sectioned along the line III-III of Figure 2; and
- Figure 4 is a front view according to arrow IV of Figure 2.

Referring now to the drawings, an orientatable and lockable wheel set which is to be used on mobile working platforms or mobile scaffolding in general is generally indicated as 1. The wheel set 1 comprises a fork-shaped support structure 2 on which a securing element, for example a pin 3, is articulated and is to engage in the structure of the mobile working platform in accordance with technical methods known in the art. For example, a connecting means comprises a ball 4 which projects partially from the side wall of the pin 3 and is resiliently retractable into the interior thereof. A reactive resilient element 5 arranged inside the pin 3 resists the retractive movement of the ball 4.

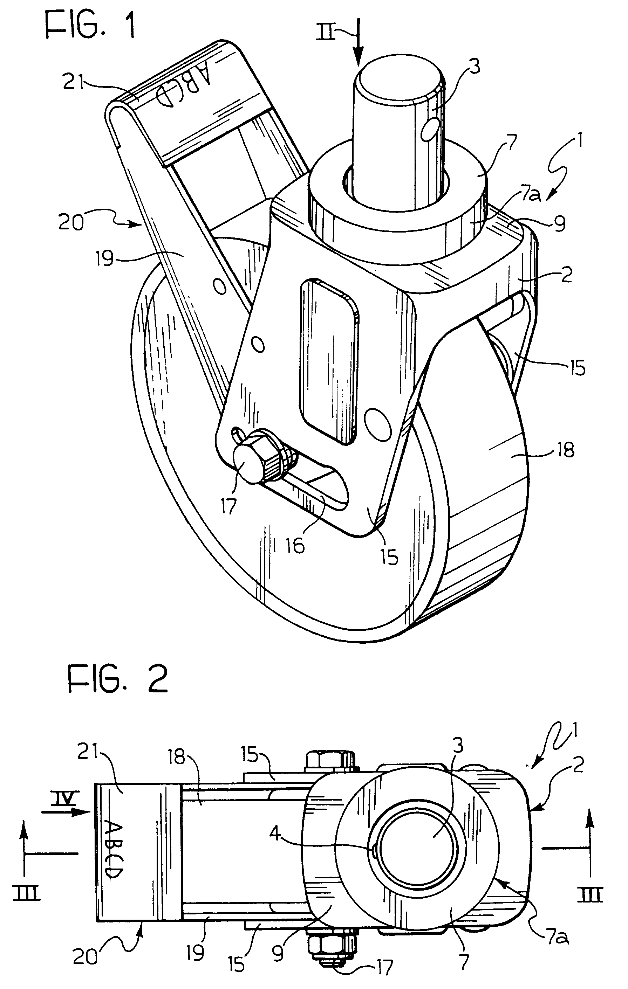

The fork 2 is produced preferably by drawing or pressing in one piece, in such a manner that its upper portion is in the shape of a cap or beaker having intrinsically high strength. The pin 3 has an annular rabbet 6 which rests on the upper portion of a covering structure 7 which has an axial bore for the passage of the lower shank of the pin 3. The covering structure 7 has a cylindrical wall 7a, the lateral space requirement of which is comparable to that of the fork 2, as is shown in Figure 2.

The interior of the covering structure 7 houses an axial bearing 8 or a technical equivalent thereof, preferably of the commercially available type, and in particular, but not exclusively, of the ball or roller type. The upper race of the bearing 8 rests on the upper wall of the covering element 7, while the lower race rests on the upper wall 9 of the fork-shaped structure 2. The upper wall 9 of the fork has a bore in a central area for the passage of an end spigot 10 of the pin 3 which has a threaded end portion on which a nut 11 is screwed which, in turn, tightens an annular race 12 against an annular ring of balls 13 accommodated partially inside an annular channel 23 in the upper wall 9, near the passage bore of the pin 3. A brake buffer 14 is interlocked with the nut 11, or is mounted thereon by other known methods.

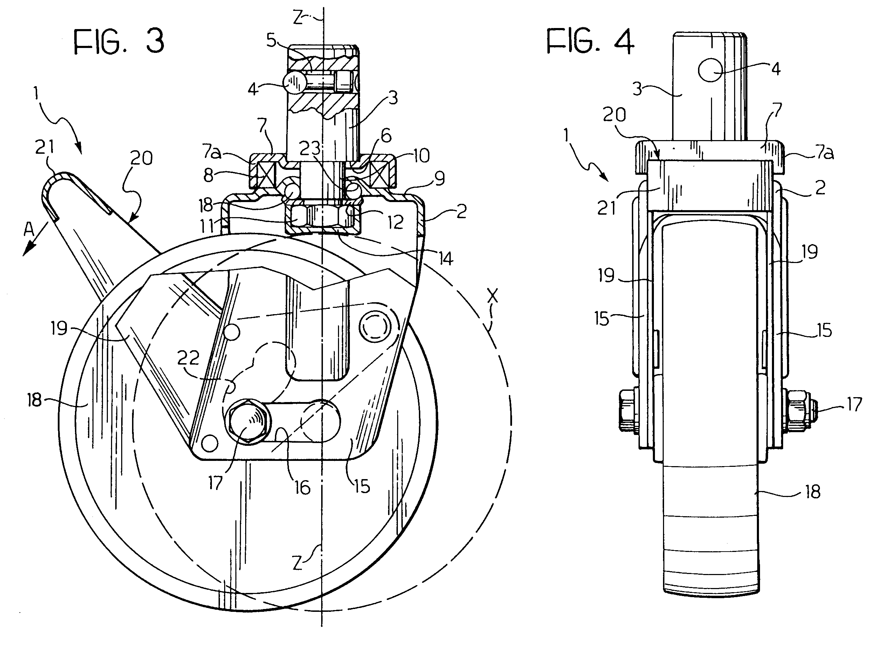

Provided on the opposing flanks 15 of the fork 2 are two respective substantially rectilinear horizontal slots 16 between which a transverse pin 17 is inserted in order to support a wheel 18. Between the flanks 15 of the fork and the flanks of the wheel 18, there are arranged two respective limbs 19 of a brake pedal 20 which is substantially fork-shaped and has an activating portion 21 which extends in an angled direction outside the fork 2 in a position which is rapidly and readily accessible to the user of the mobile working platform. At their ends opposite the activating portion 21 the limbs 19 are articulated to respective flanks of the fork 2. The pin 17 passes through two shaped slots 22 in the limbs 19 in such a manner that, when the activating portion 21 of the brake pedal 20 has been lowered according to arrow A of Figure 3, the wheel 18 is moved from the position indicated by the solid line in Figure 3 to the position indicated by the broken line X, so that it presses against the buffer 14 and is thus locked thereby. In this state, the axis of the pin 3 and the axis of symmetry of the brake buffer 14 are aligned along the vertical axis Z-Z and the point of contact of the wheel 18 in position X is near or substantially coincides with the intersection of the axis Z-Z with the ground. Thus, there are no appreciable bending stresses on the fork-shaped structure 2 and the weight of the mobile working platform is passed directly onto the wheel 18 along the direction of the axis Z-Z.

The wheel set 1 described above in a preferred embodiment is compact, is especially strong and reliable in use and is easy to maintain and clean. In addition, the adoption of an axial bearing or technical equivalents ensures good operation of the wheel set even after prolonged use.

Naturally, the principle of the innovation remaining the same, the forms of embodiment and details of construction may vary widely with respect to those described and illustrated, if not thereby departing from the scope of the present invention as defined in the appended claims.

## Claims

1. An orientatable and lockable wheel set for use in association with mobile working platforms, mobile scaffolding and the like, comprising:
- a fork-shaped body (2),
- a securing element (3) which is movable with respect to the fork-shaped body (2) about an axis (Z) substantially vertical in use, for the rotatable connection of the wheel set to a mobile working platform structure and the like,
- a wheel (18) which is rotatable on a transverse pin (17) mounted on the flanks of the fork-shaped body (2), the pin being selectively movable from a first to a second position in order to move the wheel (18) from a disengaged position to a locked position in which the wheel interacts with its outer surface with a braking surface of braking means (14),
- axial bearing means (8) interposed between a rabbet element (6) associated with the securing element (3) and an upper wall (9) of the fork-shaped body (2),
- a member (20) which actuates the locking operation, said member being associated with the transverse pin (17) in order to move said pin from the first position to the second position and vice versa along a substantially straight path substantially perpendicular to said vertical axis (Z),
characterised in said braking surface being defined on an end surface of a spigot (10) extending coaxially to said securing element (3) from said fork-shaped body (2) toward said wheel (18), in said locked position the axis of symmetry of said braking surface being aligned along the vertical axis (Z) of said securing element (3) intersecting the transverse pin (17).

2. A wheel set according to Claim 1, characterised in that the rabbet element associated with the securing element (3) is a covering element (7) having a substantially cylindrical peripheral wall (7a), the larger diameter of which is smaller than or at most equal to the overall width of the wheel set, without taking the covering element itself into account.

3. A wheel set according to Claim 2, characterised in that the larger diameter of the substantially cylindrical wall (7a) of the covering element (7) is smaller than or at most equal to the overall width of the fork-shaped body (2).

4. A wheel set according to Claim 2, characterised in that the covering element (7) has an upper wall which engages on the corresponding rabbet (6) formed on the securing element (3).

5. A wheel set according to Claim 1, characterised in that the fork-shaped body (2) has an upper portion which is substantially in the shape of a cap or a beaker.

6. A wheel set according to Claim 5, characterised in that the fork-shaped body (2) is produced in one piece by pressing or drawing.

7. A wheel set according to Claim 1, characterised in that the securing element (3) comprises the lower cylindrical spigot (10) which is coaxial with the axial bearing means (8) and the end portion of which projects between the flanks (15) of the fork-shaped body (2) and is associated with a brake buffer (14) which interacts with a portion of the outer surface of the wheel (18) in order to lock it in the operating state brought about by the operation of the lock-actuating member (20).

8. A wheel set according to Claim 1, characterised in that the braking means comprise a brake buffer (14), the areas of contact between the outer surface of the wheel (18) and, respectively, the brake buffer and the ground being substantially aligned with the vertical axis (Z) of rotation of the wheel set when the wheel (18) is locked.

## Patentansprüche

1. Verschwenkbare und verriegelbare Radanordnung zum Einsatz an mobilen Arbeitsbühnen, mobilen Gerüsten oder dergleichen, mit:
- einem gabelförmigen Abschnitt (2),
- einem Sicherungselement (3), welches mit bezug zu dem gabelförmigen Abschnitt (2) entlang einer Achse (Z) im wesentlichen vertikal während des Einsatzes verlagerbar ist, um die Radanordnung mit einem Aufbau der mobilen Arbeitsbühne oder dergleichen verdrehbar zu verbinden,
- einem Rad (18), welches an einem quer verlaufenden Stift (17) verdrehbar angeordnet ist, der an den Seiten des gabelförmigen Abschnittes (2) montiert ist, wobei der Stift wahlweise von einer ersten in eine zweite Position verlagerbar ist, um das Rad (18) von einer Außereingriffstellung in einer Eingriffsstellung zu bewegen, in der das Rad mit seiner Außenfläche mit einer Bremsfläche einer Bremseinrichtung (14) zusammenwirkt,
- einer Axiallagerung (8), die zwischen einer Abstufung (6), die zu dem Sicherungselement (3) zugehörig ist, und einer oberen Wand (9) des gabelförmigen Abschnittes (2) angeordnet ist,
- einem Element (20), welches zum Ausführen des Verriegelns vorgesehen ist, wobei dieses Element zu dem quer verlaufenden Stift (17) gehört, um diesen Stift aus der ersten Stellung in die zweite Stellung zu bewegen und umgekehrt, entlang einer im wesentlichen geraden Linie, die im wesentlichen senkrecht zu der vertikalen Achse (Z) verläuft,
**dadurch gekennzeichnet, dass** die Bremsfläche an einer Endfläche eines Schaftes (10) festgelegt ist, der sich koaxial zu dem Sicherungselement (3) erstreckt, ausgehend von dem gabelförmigen Abschnitt (2) in Richtung des Rades (18), wobei in der verriegelten Stellung die Symmetrieachse der Bremsfläche entlang der vertikalen Achse (Z) des Sicherungselementes (3) ausgerichtet ist, die sich mit dem quer verlaufenden Stift (17) kreuzt.

2. Radanordnung nach Anspruch 1, dadurch gekennzeichnet, dass die Abstufung, die dem Sicherungselement (3) zuzuordnen ist, eine Abdeckung (7) ist, die eine im wesentlichen zylindrische Umfangswand (7a) aufweist, deren größter Durchmesser kleiner ist oder gleich ist wie die gesamte Breite der Radanordnung, ohne dabei die Abdeckung selbst mitzurechnen.

3. Radanordnung nach Anspruch 2, dadurch gekennzeichnet, dass der größte Durchmesser der im wesentlichen zylindrischen Wand (7a) der Abdeckung (7) kleiner ist oder nahezu gleich ist wie die gesamte Breite des gabelförmigen Abschnittes (2).

4. Radanordnung nach Anspruch 2, dadurch gekennzeichnet, dass die Abdeckung (7) eine obere Wand aufweist, die mit der zugehörigen Abstufung (6) in Eingriff steht, die an dem Sicherungselement (3) ausgebildet ist.

5. Radanordnung nach Anspruch 1, dadurch gekennzeichnet, dass der gabelförmige Abschnitt (2) einen oberen Abschnitt aufweist, der im wesentlichen die Form einer Kappe oder eines Kelches aufweist.

6. Radanordnung nach Anspruch 5, dadurch gekennzeichnet, dass der gabelförmige Abschnitt (2) einstückig durch Pressen oder Strecken hergestellt wird.

7. Radanordnung nach Anspruch 1, dadurch gekennzeichnet, dass das Sicherungselement (3) den unteren zylindrischen Zapfen (10) umfasst, der koaxial zu der Axiallagerung (8) verläuft und dessen Endabschnitt zwischen die Seiten (15) des gabelförmigen Abschnittes (2) ragt und der mit einem Bremspuffer (14) zusammenwirkt, der mit einem Abschnitt der äußeren Oberfläche des Rades (18) zusammenwirkt, um dieses zu verriegeln, nämlich in dem Zustand, in dem es durch die Betätigung des Betätigungselementes (20) gebracht worden ist.

8. Radanordnung nach Anspruch 1, dadurch gekennzeichnet, dass die Bremseinrichtung einen Bremspuffer (14) umfasst, wobei die Kontaktflächen zwischen der Außenfläche des Rades (18) und dem Bremspuffer und dem Rad und dem Boden im wesentlichen mit der vertikal verlaufenden Achse (Z) ausgerichtet sind, wenn das Rad (18) verriegelt ist, wobei die Achse (Z) die Drehachse der Radanordnung festlegt.

## Revendications

1. Ensemble à roue orientable et blocable destiné à être utilisé en association avec des plates-formes mobiles de travail, des échafaudages mobiles et analogues, comprenant :
un corps (2) en forme de fourche,
un élément de fixation (3) qui est mobile par rapport au corps (2) en forme de fourche autour d'un axe (Z) pratiquement vertical pendant l'utilisation, afin qu'il assure le raccordement en rotation de l'ensemble à roue sur une structure de plate-forme mobile de travail et analogue,
une roue (18) qui peut tourner sur une broche transversale (17) montée sur les flancs du corps (2) en forme de fourche, la broche pouvant être déplacée sélectivement d'une première à une seconde position afin qu'elle déplace la roue (18) d'une position dégagée à une position bloquée dans laquelle la roue coopère par sa surface externe avec une surface de freinage d'un dispositif de freinage (14),
un dispositif à palier axial (8) placé entre un élément de dégagement (6) associe à l'élément de fixation (3) et une paroi supérieure (9) du corps (2) en forme de fourche, et
un organe (20) qui commande l'opération de blocage, cet organe étant associé à la broche transversale (17) afin qu'il déplace la broche de la première position à la seconde position et inversement le long d'un trajet pratiquement rectiligne qui est pratiquement perpendiculaire à l'axe vertical (Z),
caractérisé en ce que la surface de freinage est délimitée sur une surface d'extrémité d'un bout mâle (10) dépassant coaxialement vers l'élément de fixation (3) depuis le corps en forme de fourche (2) vers la roue (18), l'axe de symétrie de la surface de freinage, dans la position bloquée, étant aligné sur l'axe vertical (Z) de l'élément de fixation (3) qui recoupe la broche transversale (17).

2. Ensemble à roue selon la revendication 1, caractérisé en ce que l'élément de dégagement associé à l'élément de fixation (3) est un élement de recouvrement (7) ayant une paroi périphérique pratiquement cylindrique (7a) dont le plus grand diamètre est inférieur ou au plus égal à la largeur totale de l'ensemble à roue, sans prise en compte de l'élément de recouvrement lui-même.

3. Ensemble à roue selon la revendication 2, caractérisé en ce que le plus grand diamètre de la paroi pratiquement cylindrique (7a) de l'élément de recouvrement (7) est inférieur ou au plus égal à la largeur totale du corps en forme de fourche (2).

4. Ensemble à roue selon la revendication 2, caractérisé en ce que l'élément de recouvrement (7) a une paroi supérieure qui coopère avec un dégagement correspondant (6) formé sur l'élément de fixation (3).

5. Ensemble à roue selon la revendication 1, caractérisé en ce que le corps en forme de fourche (2) a une partie supérieure qui a pratiquement la forme d'un capuchon ou d'un bec.

6. Ensemble à roue selon la revendication 5, caractérisé en ce que le corps (2) en forme de fourche est réalisé en une seule pièce par pressage ou emboutissage.

7. Ensemble à roue selon la revendication 1, caractérisé en ce que l'élément de fixation (3) comporte un bout mâle cylindrique inférieur (10) coaxial au dispositif à palier axial (8) et dont la partie d'extrémité dépasse entre les flancs (15) du corps en forme de fourche (2) et est associé à un tampon de freinage (14) qui interagit avec une partie de la surface externe de la roue (18) pour bloquer celle-ci à l'état de fonctionnement par manoeuvre de l'organe de manoeuvre de blocage (20).

8. Ensemble à roue selon la revendication 1, caractérisé en ce que le dispositif de freinage comporte un tampon de freinage (14), les surfaces de contact de la surface externe de la roue (18) et respectivement de tampon de freinage et du sol étant pratiquement alignées sur l'axe vertical (Z) de rotation de l'ensemble à roue lorsque la roue (18) est bloquée.
